# EUROPEAN PATENT SPECIFICATION

(11) **EP 1 704 686 B1**
(45) Date of publication and mention of the grant of the patent: **21.05.2014**
(21) Application number: 04702885.7
(22) Date of filing: 16.01.2004
(51) Int. Cl.: H04L 12/70, H04L 12/28, G06F 15/16

(54) **DIRECTED PPPOE SESSION INITIATION OVER A SWITCHED ETHERNET**
GERICHTETE PPPOE-SITZUNGSEINLEITUNG ÜBER EIN VERMITTELTES ETHERNET
LANCEMENT DE SESSION DE PROTOCOLE POINT-A-POINT SUR EHTERNET DIRIGEE SUR UN ETHERNET COMMUTE

(43) Date of publication of application: 27.09.2006
(73) Proprietor: Telefonaktiebolaget LM Ericsson (Publ), 164 83 Stockholm (SE)
(72) Inventor: HUECK, Achim, D-40237 Duesseldorf (DE); MELSEN, Torben, DK-7500 Holstebro (DK); SEILER, Daniel, D-70374 Stuttgart (DE); SCHMIDT, Jens, Anton, Thomsen, DK-7500 Holstebro (DK)
(74) Representative: Sjöberg, Mats Hakan
(86) International application number: PCT/SE2004/000050
(87) International publication number: WO 2005/069562

(56) References cited:
- WO-A1-03/077146
- US-A1- 2003 039 244
- US-A1- 2003 182 434

## Description

### TECHNICAL FIELD

This invention relates to communications networks, specifically methods and systems directed at establishing Point-to-Point Protocol over Ethernet sessions over a switched Ethernet network.

### BACKGROUND INFORMATION

Point-to-Point Protocol over Ethernet (PPPoE) provides the ability to connect a network of hosts over a simple bridging access device to a remote access concentrator. With this model, each host utilizes its own PPP (Point-to-Point Protocol) stack and the user is presented with a familiar user interface. For instance, a host could be a personal computer at a client's premises and an access concentrator could be a Broadband Remote Access Servers ("BRAS"). Access control, billing and type of service can be done on a per-user, rather than a per-site, basis.

The general procedure for a point-to-point connection over Ethernet is described in the IETF - Internet Engineering Task Force - Networking Working Group Request for Comments 2516 "A Method for Transmitting PPP Over Ethernet" ("RFC 2516"). To provide a point-to-point connection, RFC 2516 provides for two stages for each PPPoE session. There is a discovery stage and a PPP session stage. When a host wishes to initiate a PPPoE session, it first performs "discovery" to identify the Ethernet MAC address of the peer and establishes a PPPoE session ID. While PPP defines a peer-to-peer relationship, the discovery stage is inherently a client-server relationship. In the discovery stage, a host (the client) discovers an access concentrator (the server). Depending on the network, there may be more than one access concentrator which may communicate with the host. The discovery stage allows the host to discover all available access concentrators so that it may then select one. Thus, when the discovery stage is completed successfully, both the host and the selected access concentrator have the information they will use to build a point-to-point connection over Ethernet.

The Discovery stage remains stateless until a PPP session is established. Once a PPP session is established, both the host and the access concentrator allocate the resources so that a PPP virtual interface can be established. After completion of the discovery stage, both peers know the PPPoE session identifier and the other peer's Ethernet address, which together define the PPPoE session uniquely.

There are typically four steps to the discovery stage. The steps consist of: (1) the host broadcasting an initiation message or packet, (2) one or more access concentrators sending Offer packets or responses, (3) the host sending a unicast Session Request packet to the selected access concentrator, and (4) the selected access concentrator sending a confirmation packet to the host. When the host receives the confirmation packet, it may proceed to the PPP Session Stage. Similarly, when the access concentrator sends the confirmation packet, it may proceed to the PPP Session Stage.

The initiation message sent by the host will be a PPPoE Active Discovery Initiation ("PADI") packet. The initiation message is a broadcast message. For purposes of this Application, the term "Broadcast" is a communication between a single device and every member of a device group. "Multicast," on the other hand, is a communication between a single device and a selected group of members of a device group. So the destination address will be set to a broadcast address. The PADI packet will also contain one service-name TAG, indicating the service the host is requesting, and any number of other TAG types. When an access concentrator receives a PADI that it can serve, it replies by sending a PPPoE Active Discovery Offer ("PADO") packet. The destination address is the unicast address of the host that initially sent the PADI. The PADO packet contains the access concentrator's name, a service-name TAG identical to the one in the PADI, and any number of other service-name TAGs indicating other services that the access concentrator offers. If the access concentrator cannot serve the PADI, it does not respond with a PADO.

Since the PADI was a broadcast message, the host may receive more than one PADO responses. The host looks through the PADO packets it receives and chooses one. Typically, the choice can be based on the AC-Name or the Services offered. The host then sends a PPPoE Active Discovery Request ("PADR") packet to the access concentrator that it has chosen. The destination address is set to the unicast Ethernet address of the selected access concentrator or server.

One purpose of deploying multiple access concentrators or "BRAS" within the same broadcast domain is for load sharing and redundancy. Access concentrator redundancy is an inherent feature of this architecture. However, no existing scheme supports inherent load distribution between the access concentrators. In principle, all access concentrators will answer the PADI packet with a PADO packet, and the first (acceptable) PADO frame that reaches the PPPoE client will determine the access concentrator with which the session is established - regardless of the existing load on the selected access concentrators. Thus, some access concentrators could be fully loaded while other available access concentrators could be lightly loaded.

Related art within this technical field is described e.g. in US 2003/0182434, disclosing how Broadband Access Servers share load information between them for the purpose of load distribution, and updating the load information each time they respond with a PADO message to a PADI message from a client terminal.

What is needed, therefore, is a method or system that can distribute the load among multiple access concentrators.

### SUMMARY

The previously mentioned needs are fulfilled with the various aspects of present invention, according to claims 1-12.

In an aspect, the access concentrators evaluate their own load, and wait a predetermined amount of time before responding to the initiation message. The length of the predetermined time is dependent upon the current load on the access concentrator. In this aspect, the host will choose the first access concentrator that replies. Because all access concentrator's wait before responding depends on the amount of current load on the access concentrator, the lightest loaded access concentrator will typically respond first.

With different aspects of the present invention, load sharing may be enabled for an Ethernet access network with multiple access concentrators in a simple and dynamic way. Load requests and/or information may flow directly between Ethernet access nodes and an access concentrator, or a mediation device may be applied if appropriate. By using a mediation device for collecting the load information, the solution facilitates load sharing between multiple access concentrators from different vendors without having to modify the functionality of these different access concentrators (provided that the access concentrator can be audited regarding its current load status).

These and other features, and advantages, will be more clearly understood from the following detailed description taken in conjunction with the accompanying drawings. It is important to note the drawings are not intended to represent the only form of the invention.

### BRIEF DESCRIPTION OF THE DRAWINGS

Fig. 1a is a functional diagram of a communications system incorporating one embodiment of the present invention.
Fig. 1b is a functional diagram representing one aspect of the communications system illustrated in Fig. 1a.
Fig. 1c is a functional diagram representing another aspect of the communications system illustrated in Fig. 1a.
Fig. 1d is the functional diagram of Fig. 1c at another point in time.
Fig. 2 is a flow diagram illustrating one embodiment of the present invention.
Fig. 3 is a block diagram of a network node incorporating one embodiment of the present invention.
Fig. 4a is a functional diagram of a communications system employing a mediation device incorporating one embodiment of the present invention.
Fig. 4b is a functional diagram representing one aspect of the communications system illustrated in Fig. 4a.
Fig. 4c is a functional diagram representing another aspect of the communications system illustrated in Fig. 4a.
Fig. 5 is a flow diagram illustrating an alternative embodiment of the present invention.
Fig. 6 is a functional diagram of a communications system incorporating an alternative embodiment of the present invention.

### DETAILED DESCRIPTION

For the purposes of promoting an understanding of the principles of the present invention, reference will now be made to the embodiments, or examples, illustrated in the drawings and specific language will be used to describe the same. It will nevertheless be understood that no limitation of the scope of the invention is thereby intended. Any alterations and further modifications in the described embodiments, and any further applications of the principles of the invention as described herein are contemplated as would normally occur to one skilled in the art to which the invention relates. Well-known elements are presented without detailed description in order not to obscure the present invention in unnecessary detail. For the most part, details unnecessary to obtain a complete understanding of the present invention have been omitted because as such details are within the skills of persons of ordinary skill in the relevant art.

For the purposes of the present disclosure, various acronyms are used, and the definitions of which are listed below:
- BRAS: Broadband Remote Access Server (a type of an Access Concentrator)
- CPE: Customer Premises Equipment
- IP: Internet Protocol Digital Subscriber Line Access
- DSLAM: Multiplexer.
- ISP: Internet Service Provider
- MAC: Media Access Control
- PADI: PPPoE Active Discovery Initiation
- PADO: PPPoE Active Discovery Offer
- PADR: PPPoE Active Discovery Request
- PADS: PPPoE Active Discovery Session-confirmation
- PADT: PPPoE Active Discovery Terminate
- PPP: Point-to-Point Protocol
- PPPoE: PPP over Ethernet
- SNMP: Simple Network Management Protocol
- VLAN: Virtual Local Area Network

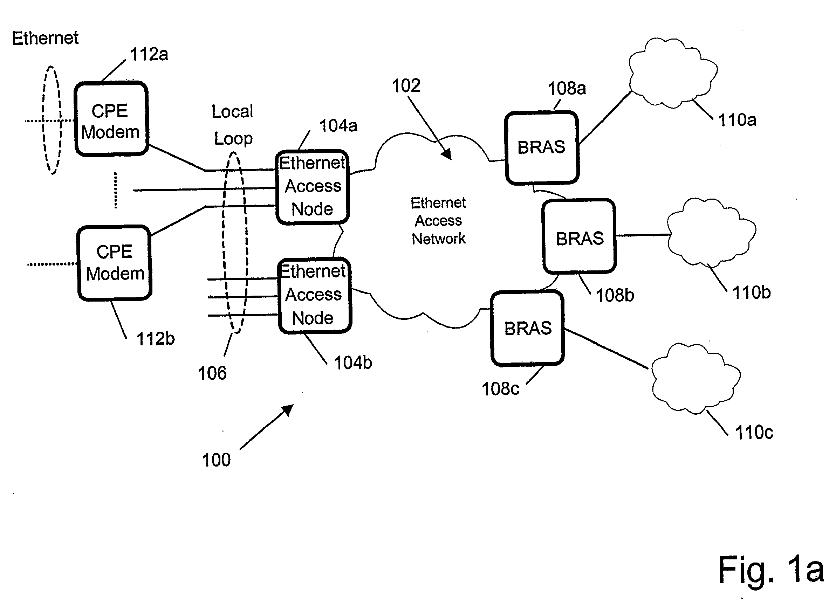

Turning now to Fig. 1a, there is illustrated a system 100 which employs certain aspects of the present invention. In this illustrative example, the system 100 comprises a switched Ethernet access network 102 having a plurality of Ethernet access nodes 104a and 104b placed on the boundary between the Ethernet access network 102 and a local loop 106 of an end-user. The Ethernet access nodes 104a and 104b may be, for instance, Ethernet-centric IP DSLAMs or Ethernet switches. A plurality of access concentrators, or in this example, BRASs 108a, 108b, and 108c are also coupled to the Ethernet access network 102. Each of the BRASs 108a-108c are coupled to additional network resources or networks which are represented by clouds 110a, 110b, and 110c, respectively (which could, in fact, be the same network). Customer subscriber equipment, such as Customer Premises Equipment Modems 112a and 112b, may be in communication with the Ethernet access node 104a in a conventional manner.

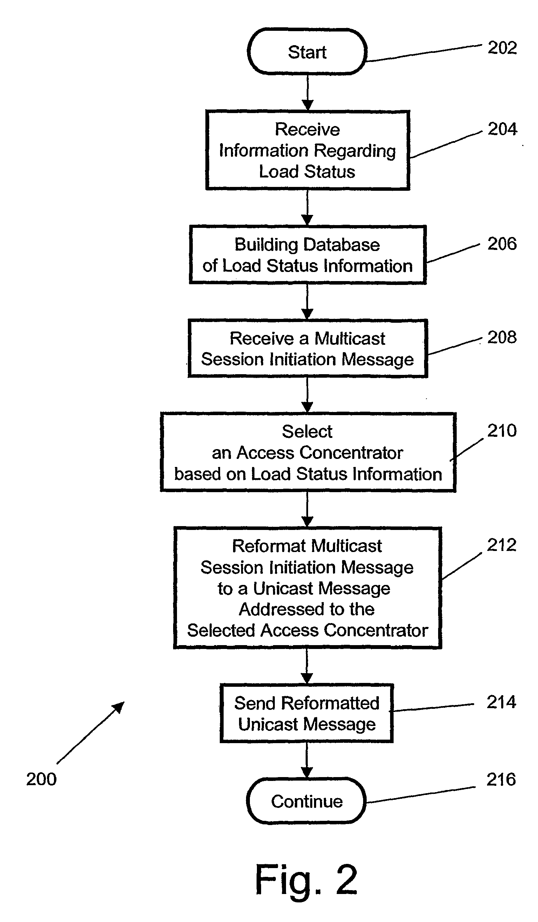

In this example, it is assumed that the BRASs 108a-108c continuously monitor their own status, e.g. regarding the current load. Thus, the values of these status parameters may form the basis for selecting the preferred BRAS for a given PPPoE session. Fig. 2 illustrates a general process 200 which might implement one embodiment of the present invention. In step 202, the process begins. In step 204, information regarding the load status of each BRASs 108a-108c is received by a network node (e.g., Ethernet access node 104a). The load status is used to build or maintain a database of the load status of the BRASs108a-108c (step 206). Thus, in step 208, when a PPPoE session initiation message is received from a host (e.g., CPE modem 112a) the network node may select which of the BRASs 108a-108c should handle the request by analyzing the database (step 210). In a PPPoE access scenario, for instance, a service-name TAG may be used by the host to request a specific service. Thus, the node selecting the BRAS may also verify that the requested service is available on the selected BRAS. The network node may learn the capacity of the BRAS by either with pre-configuration routines or dynamically (e.g., when the load status is conveyed).

In step 212, the broadcast session initiation message may be converted to a unicast message directed only to the selected BRAS. In step 214, the unicast message is then forwarded on to the selected BRAS and the discovery stage continues in a conventional manner (step 216).

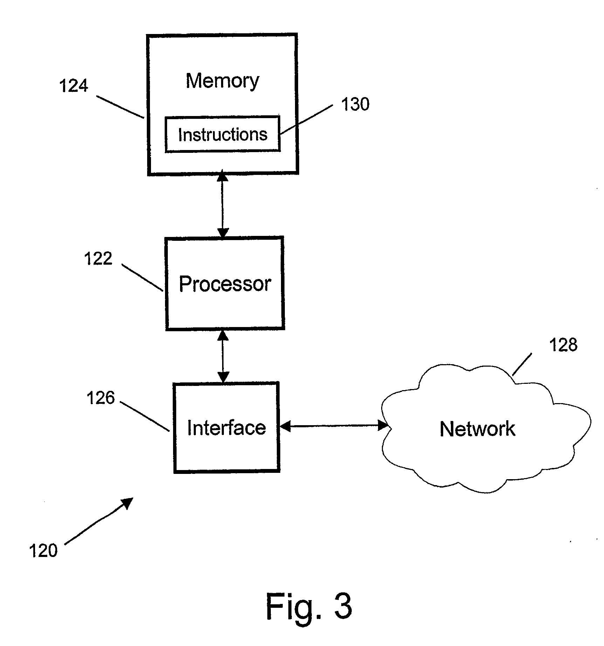

In Fig. 3, there is illustrated an example network node 120 which may implement the process 200 described above or any other process described in this Application. The network node 120 may be an Ethernet access node 104a-104b, a BRAS, or another type of network node (such as a mediation device). As is well known in the art, the network node 120 includes a processor 122 coupled to at least one memory means 124. The processor 122 may be also coupled to at least one interface 126 for communicating with a network 128. The interface 126 receives data streams from the network 128 and translates the data streams into a format readable by the processor 122. The processor 122 may then act upon the data according to processes or instructions 130 stored in the memory 124. After processing, the modified data streams are sent out through the interface 126 to another network node or resource.

### A First Example:

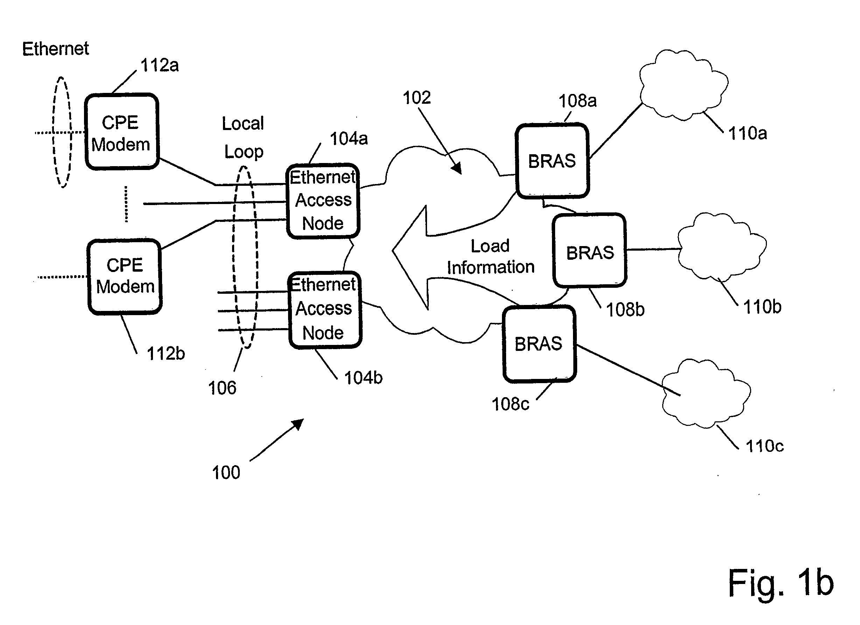

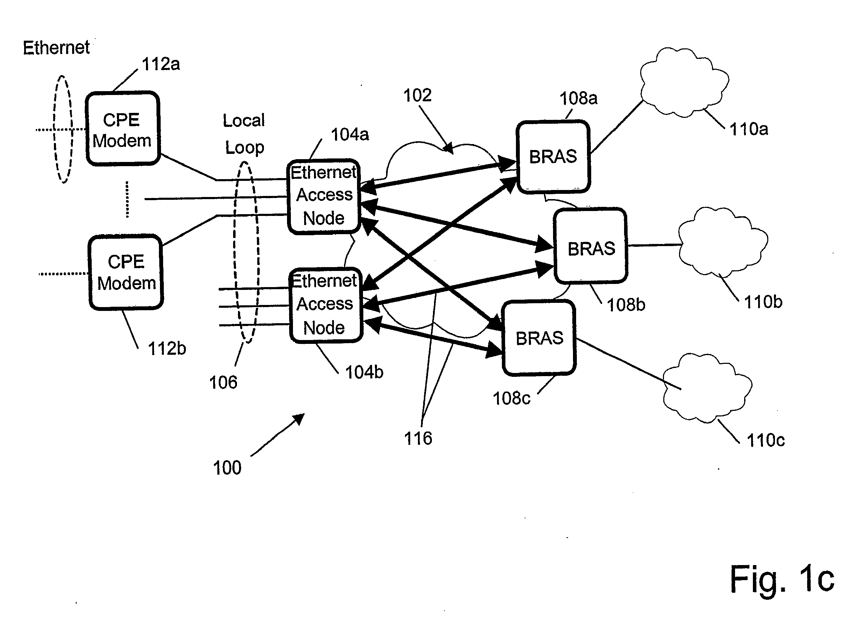

In one aspect of the present invention, the load status of each of the BRASs 108a -108c may be conveyed to the Ethernet access nodes 104a and 104b as indicated in Fig. 1b. For example, at predefined and/or configurable intervals, each of the BRASs 108a-108c broadcasts messages to the Ethernet access nodes 104a and 104b informing the nodes of the load status for the respective BRAS. Alternatively, each Ethernet access nodes 104a and 104b could poll or audit each of the BRASs 108a-108c, using unicast messages 116, to obtain the respective load status as indicated in Fig. 1c. Polling may, for example, be performed at a predefined interval, or when a new PPPoE session is initiated. In some embodiments, polling may be implemented using SNMP.

In any event, each Ethernet access node 104a-104b builds a list or database of available BRASs (e.g., BRASs 108a and 108c). For instance, if load information is not received nor can be retrieved from one of the BRASs during a pre-specified amount of time, that BRAS may be pulled out of the database. Among other information, the database may contain the corresponding address information of the BRASs (e.g., the MAC address) in addition to the load information. This database is updated whenever new information is received from the BRASs 108a-108c.

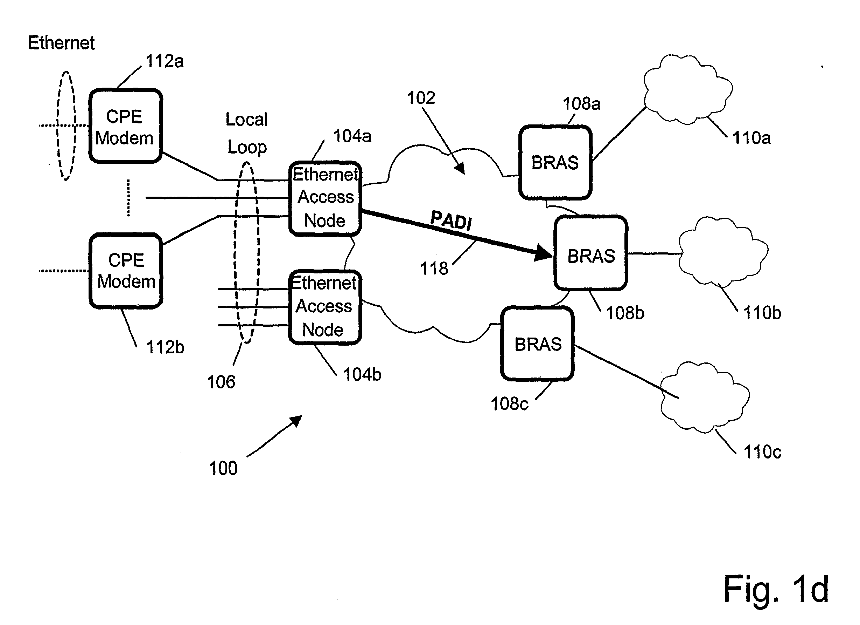

As discussed previously, when a host, for instance, the CPE modem 112a wishes to establish a new PPPoE session, the CPE modem 112a begins the discovery stage by sending a broadcast initiation message (e.g., "PADI") to the BRASs 108a-108c. This message may be intercepted by the Ethernet access node 104, which as previously discussed, is aware of the current load status for each of the BRAS 108a-108c. The Ethernet access node 104a selects which BRASs 108a-108c to direct the request based on the relative load status of all the BRAS and the service requested. Then, the Ethernet access node 104a changes the destination address of the PADI from the Ethernet broadcast address to the MAC address of the selected BRAS (e.g., BRAS 108b), before a modified message 118 is sent upstream into the Ethernet access network, as indicated in Fig. 1d. Only the selected BRAS 108b will receive the PADI. Thus, only the selected BRAS 108b will answer the PADI with a response message (e.g, a "PADO"). The BRAS 108b may then send a PADO to the MAC address of the CPE modem 112a. The discovery stage and the PPP session stage may then proceed in a conventional manner.

### A Second Example Using a Mediation Device:

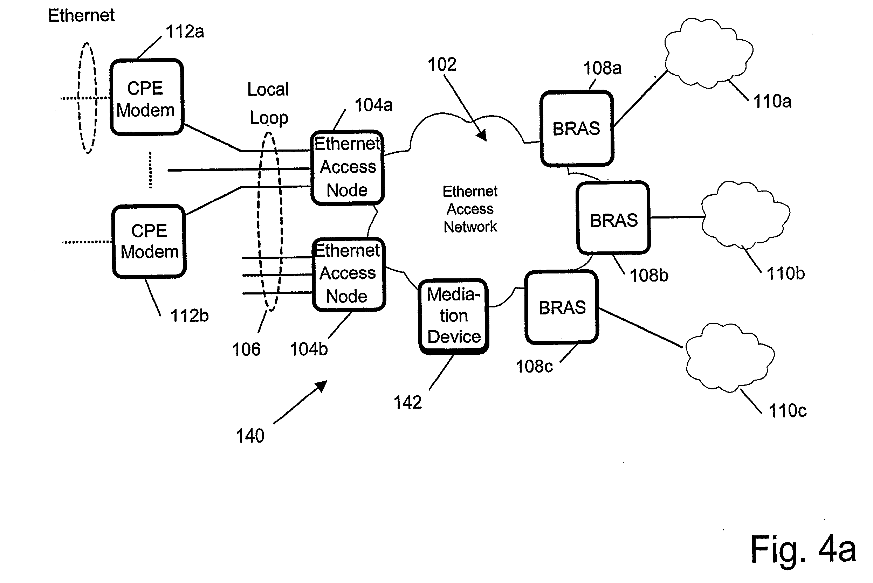

Alternatively, other embodiments might use a mediation device such as illustrated in Fig. 4a. In Fig. 4a, there is illustrated an example system 140, which is similar to the system 100 of Fig. 1a except that a mediation device 142 is employed. For brevity and clarity, a description of those components which are identical or similar to those described in connection with the example illustrated in Figs. 1a-1d will not be repeated here. Reference should be made to the foregoing paragraphs with the following description to arrive at a complete understanding of this example.

In this example, the load status of each of the BRASs 108a -108c may be conveyed to the mediation device 142. For example, at predefined intervals, each of the BRAS 108a-108c sends messages to the mediation device 142 indicating the load status for the respective BRAS. Alternatively, the mediation device 142 could poll or audit each of the BRASs 108a-108c, using unicast messages, to obtain the respective load status. Polling may, for example, be performed at a predefined interval, or when a new PPPoE session is initiated. In either case, the mediation device 142 builds a list or database of available BRASs (e.g., BRASs 108a and 108c), and stores the corresponding address information (e.g., the MAC address) in addition to the load information. This database is updated whenever new information is received from the BRASs 108a-108c.

As discussed previously, when a host, for instance, the CPE modem 112a wishes to establish a new PPPoE session, the CPE modem 112a begins the discovery stage by sending a broadcast initiation message (e.g., "PADI") to the BRASs 108a-108c. The PADI may be intercepted by the Ethernet access node 104a. The Ethernet access node 104a then forwards the PADI to the mediation device 142 (e.g., by replacing the destination broadcast address of the initiation PADI frame with a unicast MAC address of the mediation device 142). In some embodiments, there may be a mediation device cluster (not shown). In such embodiments, the destination broadcast address of the PADI frame may then be replaced by a predefined multicast address of the Mediation Device cluster. In yet other embodiments, a separate mediation device VLAN, isolated from the access concentrators could be employed.

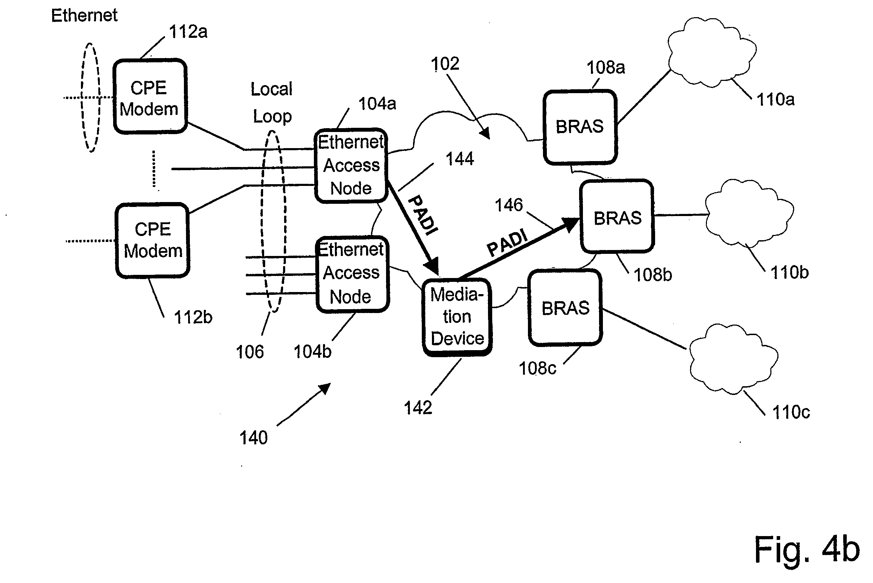

When the mediation device receives the PADI 144, the mediation device 142 analyze the database to determine the most recent load status for each of the BRASs 108a-108c. The mediation device 142 then selects which BRASs 108a-108c to direct the PADI based on the relative load status of all the BRAS and the service requested. Then, the mediation device 142 changes the destination address of the PADI 144 from the MAC address of the mediation device to the MAC address of the selected BRAS (e.g., BRAS 108b), before the modified message 146 is sent upstream into the Ethernet access network, as indicated in Fig. 4b. Only the selected BRAS (e.g., BRAS 108b) will receive the PADI. Thus, only the selected BRAS 108b will answer the PADI with a response message (e.g, a PADO). The BRAS 108b may then send a PADO to the MAC address of the CPE modem 112a. The discovery stage and the PPP session stage may then proceed in a conventional manner.

### A Third Example:

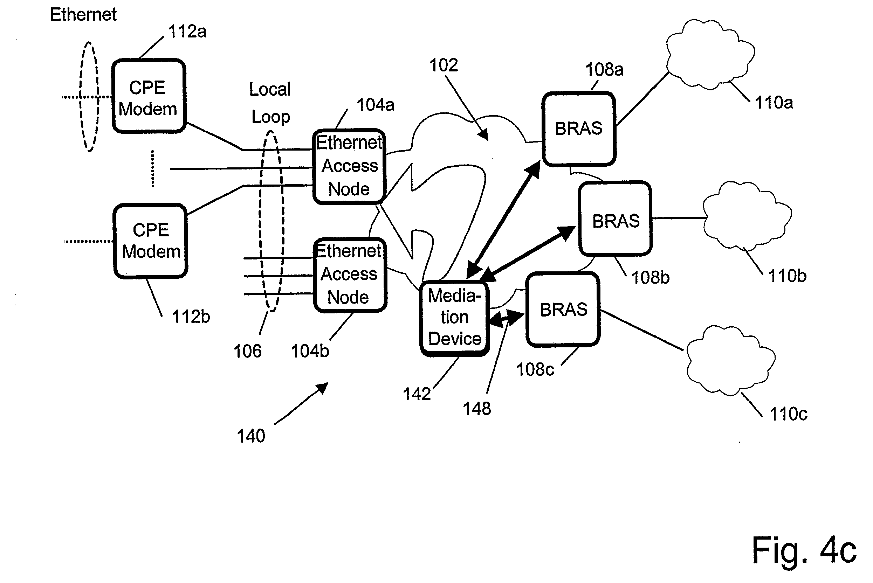

Combinations of the above embodiments are possible and are within the scope of the present invention. For instance, in one embodiment, the mediation device 142 may not build or maintain the BRAS load database, but just acts as a load information distributor. Such an embodiment is illustrated in Fig. 4c where the load status of each of the BRASs 108a -108c may be conveyed to the mediation device 142 as indicated. For example, at predefined intervals, each of the BRASs 108a-108c sends messages to the mediation device 142 and informs the mediation device of the load status for the respective BRAS. Alternatively, the mediation device 142 could poll or audit each of the BRASs 108a-108c, using unicast messages 148, to obtain the respective load status. At predefined intervals, this information is sent to the Ethernet access nodes 104a and 104b which builds a list or database of available BRAS (e.g., BRASs 108a and 108c), and stores the corresponding address information (e.g., the MAC address) in addition to the load information.

Thus, the Ethernet access nodes 104a-104b in this embodiment, functions similar to the embodiment discussed in reference to Figs. 1a-1d. As discussed previously, when a host, for instance the CPE modem 112a, wishes to establish a new PPPoE session, the CPE modem 112a begins the discovery stage by sending a broadcast initiation message (e.g., a PADI) to the BRASs 108a-108c. This message may be intercepted by the Ethernet access node 104a which as previously discussed, is aware of the current load status for each of the BRASa 108a-108c. The Ethernet access node 104a selects which BRASs 108a-108c to direct the request based on the relative load status of all the BRASs and the service requested. Then, the Ethernet access node 104a changes the destination address of the PADI from the Ethernet broadcast address to the MAC address of the selected BRAS (e.g., BRAS 108b), before the modified message is sent upstream into the Ethernet access network. Only the selected BRAS 108b will receive the PADI. Thus, only the selected BRAS 108b will answer the PADI with a response message (e.g, PADO). The BRAS 108b may then send a PADO to the MAC address of the CPE modem 112a. The discovery stage and the PPP session stage then proceed in a conventional manner.

### A Fourth Example without Using Pre-sampling

Polling or broadcasting access concentrator load information (i.e., sampling) may increase the overall load on the network. Thus, the frequency of the polling or broadcasting may be limited by overall network capacity. On the other hand, increasing the frequency of the sampling increases the accuracy of the load distribution. The load distribution analysis is likely to be performed using historic data. If the period between sampling is too long, traffic may be directed toward a single BRAS - resulting in a high load situation for the selected BRAS. Thus, the sampling frequency may be balanced against the overall load on the network. Additionally, the BRASs may belong to an ISP that is another company than the Network Access provider. In this situation, there may need to be bridging between the management networks. Yet, for security reasons, many operators may not want to share their management networks.

In one embodiment, a mediation device could distribute the load by a simple "round robin" approach without the need for pre-sampling or exchanging management information. In another embodiment, a mediation device could use a round robin strategy with a load distribution scheme to assure that access concentrator are not too loaded if the sampling frequency is relatively long.

Another aspect of the present invention may be implemented without the use of sampling or sharing of management information between competing operating companies. In this aspect, the host (i.e., the PPPoE session initiator) selects the first access concentrator that replies with a PADO (assuming the service requirements of the host are met). In this embodiment, however, the access concentrators sends a PADO as reply to the PADI only after waiting a predetermined period of time, where the predetermined period of time depends on the load on the access concentrator. Thus, when the load on the access concentrator is heavy, the response time will be relatively long. Similarly, when the load on the access concentrator is light, the response time will be relatively short.

Load sharing among the access concentrators, therefore, may be accomplished in a simple and elegant way. This embodiment allows the host to select the access concentrator with the lowest load without the need for pre-sampling or maintaining a database. Thus, no management traffic needs to flow between the BRASs and the general access network, including the Ethernet Access Devices or even the CPE modems.

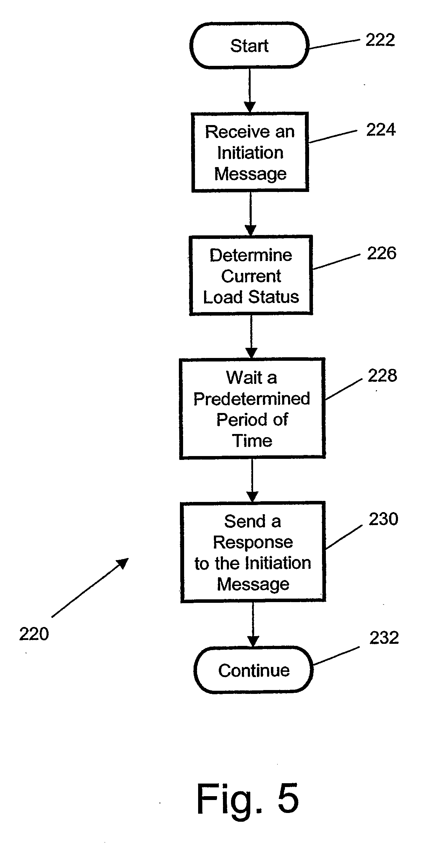

Turning now to Fig. 5, which illustrates a general process 220 which might implement one embodiment of the present invention. In step 222, the process begins. In step 224, an initiation message (e.g., a PADI) is received from a host. In response, the network node receiving the initiation message determines the current load on the node (step 226). In step 228, the node waits a predetermined period of time before responding to the initiation message. The magnitude of this predetermined period is dependent on the load on the system. In step 230, the node then sends the appropriate response message (e.g., a PADO) and the discovery stage continues in a conventional manner (step 232). The exact functional relationship between the access concentrator load and PADI-PADO response time may depend on a number of factors. In some cases, the response time may simply be a linear relationship to the CPU load. In other cases, the access concentrator may simply stop replying to PADI (e.g., if it cannot support any additional PPP sessions). In several embodiments, all access concentrators would use the same functional relationship to provide for consistent response times among the access concentrators.

Additionally, it is may be preferred that the network delay from each access concentrator to the host be either insignificant or approximately equal. This may be accomplished by having the access concentrators physically located almost an equal distance from the host.

If both the host and the access concentrator adhere to the protocol described in this example, load sharing among the access concentrators will happen automatically. However, if there are uncertainties of whether either the host or the access concentrator will adhere to these protocols, the network can be upgraded to enforce this policy. One enforcement mechanism can be discussed with reference to the network illustrated in Fig. 1 a. As previously discussed, the host (e.g. the CPE modem 112a) selects the response message or PADO received that fulfils the service requirement. If the network operator is uncertain about whether all CPE equipment are adapted to perform this function, the host role policy can be enforced by the Ethernet access node 104a. To enforce the host selection policy, the Ethernet access node may perform the following procedure:
(1) Intercept all PADI requests from the CPE side and record the source MAC address of the CPE modem 112a before forwarding the PADI to the BRASs 108a-108c.
(2) Forward only the first received PADO from the BRASs to the CPE Modem 112a.
This procedure is appropriate if all the BRASs offer the same service(s).

### A Fifth Example Using a Mediation Device, but No Presampling:

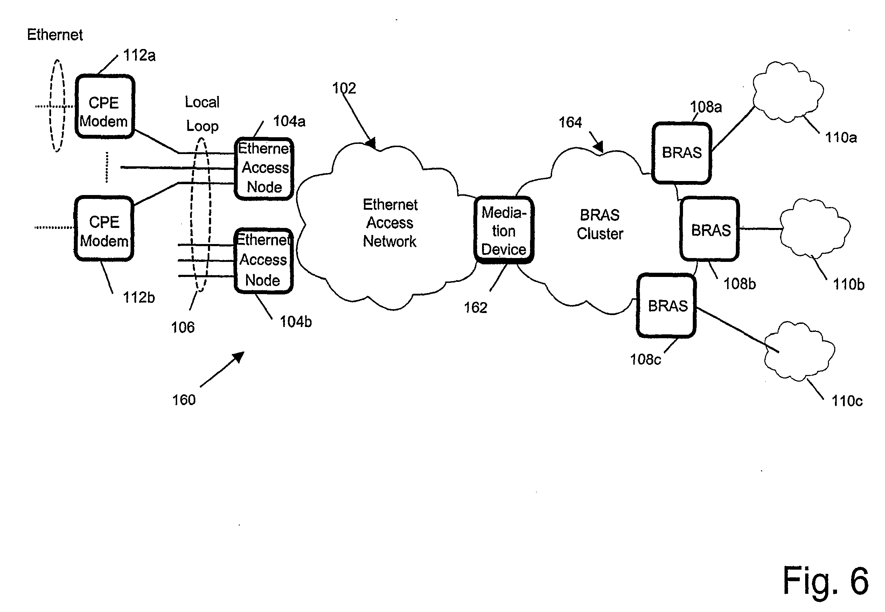

An enforcement mechanism may also be implemented on the BRAS side of the network. As previously discussed, the BRASs wait a predetermined time before responding. If the access network operator is uncertain about whether the BRASs are programmed with this feature, the network operator may change the network topology to assure compliance with this policy. Such a network topology is illustrated in Fig. 6.

In Fig. 6, there is illustrated an example system 160, which is similar to the system 100 of Fig. 1a except that a mediation device 162 is employed to separate a BRAS cluster 164 from the Ethernet access network 102. For brevity and clarity, a description of those components which are identical or similar to those described in connection with the example illustrated in Figs. 1a will not be repeated here. Reference should be made to the foregoing paragraphs with the following description to arrive at a complete understanding of this example.

Thus, in this example, the BRAS's role policy can be enforced by the mediation device 162. To enforce the BRAS policy, the mediation device 162 may perform the following procedure:
(1) Intercept all PADI requests from the CPE side and record the source MAC address of the CPE modem 112a before forwarding the PADI to the BRASs 108a-108c.
(2) Forward only the first received PADO from the BRASs to the CPE Modem 112a.
As in previous examples, this procedure is appropriate if all the BRASs offer the same service(s). In several embodiments, the load factors may vary depending on the type and manufacturer of the BRAS. Load factors may include CPU load, memory consumption, number of simultaneous PPP sessions, or a combination of some of these factors. Currently, there is no standardized procedure known to the inventors to poll a BRAS to determine a standardized load on the BRAS. Depending on the model and brand of the BRAS, important load factors may be CPU load, memory consumption, number of simultaneous PPP sessions, etc., or some combination of these factors. However, which load factor affects the performance of the BRAS may be known only to the manufacturer of the BRAS. Additionally, the procedures for determining the load on the BRAS may also vary from BRAS type to BRAS type. However, for an accurate load distribution, the BRASs should use the same load determination procedures. Alternatively, the mediation device may be pre-configured with information on each BRAS so that it knows how to interpret the response times.

This Application is not intended to be exhaustive or to limit the invention to the precise form disclosed wherein the scope of the invention is defined by the appended claims. Many modifications and variations are possible in light of the above teaching. Those skilled in the art will readily appreciate that many modifications are possible in the exemplary embodiments.

For example, in one embodiment there is presented a method including: receiving information regarding the load status of each access concentrator, building a database of the load status of each access concentrator based on the received information, receiving a session initiation message from a host, selecting an access concentrator based on the load status indicated in the database, modifying the session initiation message so that it is addressed to the selected access concentrator, and forwarding the modified message to the selected access concentrator.

Additional embodiments may also include verifying that a requested service is available on the selected access concentrator. The network node may learn of the availability of the access concentrators with either with pre-configuration routines or dynamically (e.g., when the load status is conveyed).

The abstract of the disclosure is provided for the sole reason of complying with the rules requiring an abstract, which will allow a searcher to quickly ascertain the subject matter of the technical disclosure of any patent issued from this disclosure. It is submitted with the understanding that it will not be used to interpret or limit the scope or meaning of the claims.

Any advantages and benefits described may not apply to all embodiments of the invention. The foregoing description of the embodiments of the invention has been presented for the purposes of illustration and description. It is intended that the scope of the invention be limited not by this detailed description, but rather by the claims appended hereto.

## Claims

1. A method for performing load distribution among a plurality of access concentrators in a network, the method comprising:
sending, by a host, a broadcast message to the plurality of access concentrators,
determining (226), by at least one access concentrator of the plurality of access concentrators, a load on the at least one access concentrator in response to receiving the broadcast message,
waiting (228) a period of time before sending a response message to the broadcast message, wherein the period of time is a function of the load on the at least one access concentrator,
receiving, by the host, a plurality of response messages in response to the broadcast message,
determining, based on the plurality of response messages, the plurality of access concentrators which are capable of fulfilling predetermined service requirements of the host, and
selecting an access concentrator from the plurality of access concentrators, wherein the selected access concentrator sent the first response message to the host, such that the host can establish a PPP session with the selected access concentrator.

2. The method according to claim 1, wherein the broadcast message is a Point-to-Point Protocol over Ethernet, PPPoE, Active Discovery Initiation message.

3. The method according to claim 1, wherein the response message is a Point-to-Point Protocol over Ethernet, PPPoE, Active Discovery Offer message.

4. A method for performing load distribution among a plurality of access concentrators in a network, the method comprising:
receiving a broadcast message addressed to the plurality of access concentrators,
recording the Media Access Control, MAC, address of a sender of the broadcast message,
forwarding the broadcast message onto the plurality of access concentrators,
intercepting a plurality of response messages addressed to the sender of the broadcast message,
selecting the access concentrator having been the first to forward a respective response message,
forwarding the response from the selected access concentrator,
wherein each plurality of access concentrators determines the load on the respective access concentrator in response to receiving the broadcast message and waits a period of time before sending a response message to the broadcast message, wherein the period of time is a function of the load on the at least one access concentrator, such that a sender can establish a PPP session with the selected access concentrator.

5. The method according to claim 4, wherein the broadcast message is a Point-to-Point Protocol over Ethernet, PPPoE, Active Discovery Initiation message.

6. The method according claim 4, wherein the response message is a Point-to-Point Protocol over Ethernet, PPPoE, Active Discovery Offer message.

7. A network node comprising:
a processor (122),
a network interface (126) in communication with the processor (122), and
a memory (124) coupled to the processor (122), wherein the memory (124) includes instructions for:
sending a broadcast message to a plurality of access concentrators,
receiving a plurality of response messages in response to the broadcast message,
determining from the plurality of response messages the plurality of access concentrators which are capable of fulfilling predetermined service requirements of the node,
selecting from the plurality of access concentrators, an access concentrator which sent the first response to the node, so that the node can establish a PPP session with the access concentrator.

8. The network node according to claim 7, wherein the broadcast message is a Point-to-Point Protocol over Ethernet, PPPoE, Active Discovery Initiation message.

9. The network node according to any of the claims 7-8, wherein the response message is a Point-to-Point Protocol over Ethernet, PPPoE, Active Discovery Offer message.

10. A network node comprising:
a processor (122),
a network interface (126) in communication with the processor (122), and
a memory (124) coupled to the processor (122), wherein the memory (124) includes instructions for:
receiving a broadcast message,
determining a load on the processor, in response to receiving the broadcast message, and
waiting a period of time before sending a response message to the broadcast message, wherein the period of time is a function of the determined load on the processor.

11. The network node according to claim 10, wherein the broadcast message is a Point-to-Point Protocol over Ethernet, PPPoE, Active Discovery Initiation message.

12. The network node according to any of the claims 10-11, wherein the response message is a Point-to-Point Protocol over Ethernet, PPPoE, Active Discovery Offer message.

## Patentansprüche

1. Verfahren zum Durchführen von Lastverteilung auf eine Vielzahl von Zugangskonzentratoren in einem Netzwerk, wobei das Verfahren umfasst:
Senden einer Rundsendenachricht durch einen Host an die Vielzahl von Zugangskonzentratoren,
durch mindestens einen Zugangskonzentrator aus der Vielzahl von Zugangskonzentratoren erfolgendes Bestimmen (226) einer Last auf dem mindestens einen Zugangskonzentrator als Antwort auf das Empfangen der Rundsendenachricht,
Abwarten (228) eines Zeitraums vor dem Senden einer Antwortnachricht auf die Rundsendenachricht, worin der Zeitraum eine Funktion der Last auf dem mindestens einen Zugangskonzentrator ist,
durch den Host erfolgendes Empfangen einer Vielzahl von Antwortnachrichten als Antwort auf die Rundsendenachricht,
auf der Vielzahl von Antwortnachrichten beruhendes Bestimmen der Vielzahl von Zugangskonzentratoren, die imstande sind, vorbestimmte Dienstanforderungen des Hosts zu erfüllen, und
Auswählen eines Zugangskonzentrators aus der Vielzahl von Zugangskonzentratoren, worin der ausgewählte Zugangskonzentrator die erste Antwortnachricht an den Host sendete, so dass der Host eine PPP-Sitzung mit dem ausgewählten Zugangskonzentrator einrichten kann.

2. Verfahren nach Anspruch 1, worin die Rundsendenachricht eine Nachricht zur Auslösung der aktiven Auffindung im Punkt-zu-Punkt-Protokoll über Ethernet, PPPoE, ist.

3. Verfahren nach Anspruch 1, worin die Antwortnachricht eine Nachricht zum Angebot der aktiven Auffindung im Punkt-zu-Punkt-Protokoll über Ethernet, PPPoE, ist.

4. Verfahren zum Durchführen von Lastverteilung auf eine Vielzahl von Zugangskonzentratoren in einem Netzwerk, wobei das Verfahren umfasst:
Empfangen einer an die Vielzahl von Zugangskonzentratoren gerichteten Rundsendenachricht,
Aufzeichnen der Medienzugangssteuerungs-(MAC-)Adresse eines Senders der Rundsendenachricht,
Weiterleiten der Rundsendenachricht zu der Vielzahl von Zugangskonzentratoren,
Abfangen einer an den Sender der Rundsendenachricht gerichteten Vielzahl von Antwortnachrichten,
Auswählen des Zugangskonzentrators, der als erster eine jeweilige Antwortnachricht weitergeleitet hat,
Weiterleiten der Antwort vom ausgewählten Zugangskonzentrator,
worin jeder aus der Vielzahl von Zugangskonzentratoren als Antwort auf das Empfangen der Rundsendenachricht die Last auf dem jeweiligen Zugangskonzentrator bestimmt und vor dem Senden einer Antwortnachricht auf die Rundsendenachricht einen Zeitraum abwartet, worin der Zeitraum eine Funktion der Last auf dem mindestens einen Zugangskonzentrator ist, so dass ein Sender eine PPP-Sitzung mit dem ausgewählten Zugangskonzentrator einrichten kann.

5. Verfahren nach Anspruch 4, worin die Rundsendenachricht eine Nachricht zur Auslösung der aktiven Auffindung im Punkt-zu-Punkt-Protokoll über Ethernet, PPPoE, ist.

6. Verfahren nach Anspruch 4, worin die Antwortnachricht eine Nachricht zum Angebot der aktiven Auffindung im Punkt-zu-Punkt-Protokoll über Ethernet, PPPoE, ist.

7. Netzwerkknoten, umfassend:
einen Prozessor (122),
eine Netzwerkschnittstelle (126) in Kommunikation mit dem Prozessor (122), und
einen mit dem Prozessor (122) gekoppelten Speicher (124), worin der Speicher (124) Anweisungen einschließt zum:
Senden einer Rundsendenachricht an eine Vielzahl von Zugangskonzentratoren,
Empfangen einer Vielzahl von Antwortnachrichten als Antwort auf die Rundsendenachricht,
Bestimmen der Vielzahl von Zugangskonzentratoren, die imstande sind, vorbestimmte Dienstanforderungen des Knotens zu erfüllen, aus der Vielzahl von Antwortnachrichten,
Auswählen eines Zugangskonzentrators aus der Vielzahl von Zugangskonzentratoren, der die erste Antwort an den Host sendete, so dass der Knoten eine PPP-Sitzung mit dem Zugangskonzentrator einrichten kann.

8. Netzwerkknoten nach Anspruch 7, worin die Rundsendenachricht eine Nachricht zur Auslösung der aktiven Auffindung im Punkt-zu-Punkt-Protokoll über Ethernet, PPPoE, ist.

9. Netzwerkknoten nach einem der Ansprüche 7-8, worin die Antwortnachricht eine Nachricht zum Angebot der aktiven Auffindung im Punkt-zu-Punkt-Protokoll über Ethernet, PPPoE, ist.

10. Netzwerkknoten, umfassend:
einen Prozessor (122),
eine Netzwerkschnittstelle (126) in Kommunikation mit dem Prozessor (122), und
einen mit dem Prozessor (122) gekoppelten Speicher (124), worin der Speicher (124) Anweisungen einschließt zum:
Empfangen einer Rundsendenachricht,
Bestimmen einer Last auf dem Prozessor als Antwort auf das Empfangen der Rundsendenachricht, und
Abwarten eines Zeitraums vor dem Senden einer Antwortnachricht auf die Rundsendenachricht, worin der Zeitraum eine Funktion der bestimmten Last auf dem Prozessor ist.

11. Netzwerkknoten nach Anspruch 10, worin die Rundsendenachricht eine Nachricht zur Auslösung der aktiven Auffindung im Punkt-zu-Punkt-Protokoll über Ethernet, PPPoE, ist.

12. Verfahren nach einem der Ansprüche 10-11, worin die Antwortnachricht eine Nachricht zum Angebot der aktiven Auffindung im Punkt-zu-Punkt-Protokoll über Ethernet, PPPoE, ist.

## Revendications

1. Procédé de mise en oeuvre d'une répartition de charge entre une pluralité de concentrateurs d'accès dans un réseau, le procédé consistant à :
envoyer, par le biais d'un hôte, un message de diffusion à la pluralité de concentrateurs d'accès ;
déterminer (226), par le biais d'au moins un concentrateur d'accès de la pluralité de concentrateurs d'accès, une charge sur ledit au moins un concentrateur d'accès, en réponse à la réception du message de diffusion ;
attendre (228) une période de temps avant d'envoyer un message de réponse en réponse au message de diffusion, dans lequel la période de temps est en fonction de la charge sur ledit au moins un concentrateur d'accès ;
recevoir, par l'hôte, une pluralité de messages de réponse en réponse au message de diffusion ;
déterminer, sur la base de la pluralité de messages de réponse, la pluralité de concentrateurs d'accès qui sont aptes à satisfaire les exigences de service prédéterminées de l'hôte ; et
sélectionner un concentrateur d'accès à partir de la pluralité de concentrateurs d'accès, dans lequel le concentrateur d'accès sélectionné a envoyé le premier message de réponse à l'hôte, de sorte que l'hôte peut établir une session de protocole PPP avec le concentrateur d'accès sélectionné.

2. Procédé selon la revendication 1, dans lequel le message de diffusion est un message d'initiation de détection active de protocole point à point sur Ethernet, PPPoE.

3. Procédé selon la revendication 1, dans lequel le message de réponse est un message d'offre de détection active de protocole point à point sur Ethernet, PPPoE.

4. Procédé de mise en oeuvre d'une répartition de charge entre une pluralité de concentrateurs d'accès dans un réseau, le procédé consistant à :
recevoir un message de diffusion adressé à la pluralité de concentrateurs d'accès ;
enregistrer l'adresse de contrôle d'accès au support, MAC, d'un expéditeur du message de diffusion ;
acheminer le message de diffusion sur la pluralité de concentrateurs d'accès ;
intercepter une pluralité de messages de réponse adressés à l'expéditeur du message de diffusion ;
sélectionner le concentrateur d'accès qui a été le premier à envoyer un message de réponse respectif ;
acheminer la réponse à partir du concentrateur d'accès sélectionné ;
dans lequel chaque concentrateur de la pluralité de concentrateurs d'accès détermine la charge sur le concentrateur d'accès respectif en réponse à la réception du message de diffusion, et attend une période de temps avant d'envoyer un message de réponse en réponse au message de diffusion, dans lequel la période de temps est en fonction de la charge sur ledit au moins un concentrateur d'accès, de sorte qu'un expéditeur peut établir une session de protocole PPP avec le concentrateur d'accès sélectionné.

5. Procédé selon la revendication 4, dans lequel le message de diffusion est un message d'initiation de détection active de protocole point à point sur Ethernet, PPPoE.

6. Procédé selon la revendication 4, dans lequel le message de réponse est un message d'offre de détection active de protocole point à point sur Ethernet, PPPoE.

7. Noeud de réseau comprenant :
un processeur (122) ;
une interface de réseau (126) en communication avec le processeur (122) ; et
une mémoire (124) couplée au processeur (122), dans laquelle la mémoire (124) comprend des instructions pour :
envoyer un message de diffusion à une pluralité de concentrateurs d'accès ;
recevoir une pluralité de messages de réponse en réponse au message de diffusion ;
déterminer, à partir de la pluralité de messages de réponse, la pluralité de concentrateurs d'accès qui sont aptes à satisfaire des exigences de service prédéterminées du noeud ;
sélectionner, à partir de la pluralité de concentrateurs d'accès, un concentrateur d'accès qui a envoyé la première réponse au noeud, de sorte que le noeud peut établir une session de protocole PPP avec le concentrateur d'accès.

8. Noeud de réseau selon la revendication 7, dans lequel le message de diffusion est un message d'initiation de détection active de protocole point à point sur Ethernet, PPPoE.

9. Noeud de réseau selon l'une quelconque des revendications 7 à 8, dans lequel le message de réponse est un message d'offre de détection active de protocole point à point sur Ethernet, PPPoE.

10. Noeud de réseau comprenant :
un processeur (122) ;
une interface de réseau (126) en communication avec le processeur (122) ; et
une mémoire (124) couplée au processeur (122), dans laquelle la mémoire (124) comprend des instructions pour :
recevoir un message de diffusion ;
déterminer une charge sur le processeur, en réponse à la réception du message de diffusion ; et
attendre une période de temps avant d'envoyer un message de réponse en réponse au message de diffusion, dans lequel la période de temps est en fonction de la charge déterminée sur le processeur.

11. Noeud de réseau selon la revendication 10, dans lequel le message de diffusion est un message d'initiation de détection active de protocole point à point sur Ethernet, PPPoE.

12. Noeud de réseau selon l'une quelconque des revendications 10 à 11, dans lequel le message de réponse est un message d'offre de détection active de protocole point à point sur Ethernet, PPPoE.
